(19) Europäisches Patentamt
European Patent Office
Office européen des brevets

(11) **EP 3 128 258 A1**

(12) **EUROPEAN PATENT APPLICATION**
published in accordance with Art. 153(4) EPC

(43) Date of publication:
**08.02.2017 Bulletin 2017/06**

(51) Int Cl.:
*F25B 1/00* *(2006.01)* *C09K 5/04* *(2006.01)*
*F25B 43/00* *(2006.01)*

(21) Application number: **14886247.7**

(22) Date of filing: **17.03.2014**

(86) International application number:
**PCT/JP2014/057037**

(87) International publication number:
**WO 2015/140878 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Mitsubishi Electric Corporation**
**Chiyoda-ku**
**Tokyo 100-8310 (JP)**

• **Asahi Glass Company, Limited**
**Tokyo 100-8405 (JP)**

(72) Inventor: **YAMASHITA, Koji**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **ACCUMULATOR AND REFRIGERATION CYCLE APPARATUS**

(57) Provided is an accumulator 19 to be connected to a compressor 10 by piping on a refrigerant suction side of a refrigeration cycle apparatus 100 configured to form a refrigerant circuit by using, as refrigerant, refrigerant containing a substance having such a property as to cause a disproportionation reaction, the accumulator 19 being configured to accumulate refrigerant in a liquid state and including: a shell 44 configured to accumulate the refrigerant in the liquid state therein; an inflow pipe 41 configured to cause the refrigerant flowing through the refrigerant circuit to flow into a container; and an outflow pipe 42 configured to cause the refrigerant to flow out of the shell 44, in which an outlet shape of the inflow pipe or an outlet of the inflow pipe is formed so that a flow speed of the refrigerant in a direction normal to an inner wall surface of the shell 44 at time of collision of the refrigerant, which flows into the shell 44 through the inflow pipe 41, against the inner wall surface of the shell 44 is lower than a flow speed of the refrigerant inside the inflow pipe 41.

FIG. 5

DIRECTION NORMAL TO CENTER LINE OF INFLOW PIPE 41

**Description**

Technical Field

The present invention relates to an accumulator and the like to be used for a refrigeration cycle apparatus such as an air-conditioning apparatus to be applied to, for example, a multi-air-conditioning apparatus for a building.

Background Art

In a refrigeration cycle apparatus configured to form a refrigerant circuit configured to circulate refrigerant therethrough so as to perform air-conditioning and other operations, like a multi-air-conditioning apparatus for a building, R410A that is incombustible, R32 having low combustibility, or a highly combustible substance containing hydrogen and carbon, such as propane, is used as the refrigerant. When being released into atmosphere, the above-mentioned substances are decomposed in the atmosphere to turn into different substances with different time lengths. In the refrigeration cycle apparatus, however, the above-mentioned substances have high stability and therefore can be used as the refrigerant for a period of time as long as to several tens of years.

In contrast, some of the substances each containing hydrogen and carbon are poor in stability even in a refrigeration cycle apparatus and hence are each hardly used as refrigerant. Those substances poor in stability are, for example, substances each having such a property as to cause a disproportionation reaction. The term "disproportionation" refers to the property by which substances of the same kind react with each other to change into another substance. For example, when certain strong energy is applied to refrigerant under a state in which a distance between adjacent substances is extremely small, such as a liquid state, the energy causes a disproportionation reaction and hence the adjacent substances react with each other to change into another substance. When the disproportionation reaction occurs, heat generation occurs to cause an abrupt increase in temperature and hence an abrupt increase in pressure may occur. For example, when a substance having such a property as to cause a disproportionation reaction is used as the refrigerant of a refrigeration cycle apparatus, and is enclosed in a pipe made of copper or the like, the pipe cannot completely withstand an increase in pressure of the refrigerant therein and hence an accident, such as pipe rupture, may occur. For example, 1,1,2-trifluoroethylene (HFO-1123) or acetylene has been known as the substance having such a property as to cause a disproportionation reaction.

In addition, there exists a heat cycle system (refrigeration cycle apparatus) using 1,1,2-trifluoroethylene (HFO-1123) as a working medium for a heat cycle (for example, Patent Literature 1).

Citation List

Patent Literature

Patent Literature 1: International Patent WO 12/157764A (page 3, page 12, Fig. 1, etc.)

Summary of Invention

Technical Problem

In the refrigeration cycle apparatus such as the thermal cycle system disclosed in Patent Literature 1, 1,1,2-trifluoroethylene (HFO-1123) is disclosed to be used as a working medium for a thermal cycle. Here, 1,1,2-trifluoroethylene (HFO-1123) is a substance having such a property as to cause a disproportionation reaction. When the substance having such a property as to cause a disproportionation reaction is used as the refrigerant as it is, the adjacent substances may react with each other to turn into a different substance due to some energy at a location where the substance in a liquid state is present, such as a liquid or a two-phase substance, in which a distance between the adjacent substances is extremely small, failing to function as the refrigerant. In addition, there is a fear that an accident, e.g., pipe rupture may occur due to a sudden pressure rise. Therefore, there is a problem in that, for the use as the refrigerant, the substance having such a property as to cause a disproportionation reaction needs to be used so as not to cause the disproportionation reaction. Therefore, efforts to prevent occurrence of the disproportionation reaction are required. However, in Patent Literature 1, for example, there is no disclosure of a method for realizing an apparatus capable of preventing the occurrence of the disproportionation reaction and the like.

The present invention has been made to solve the problem described above, and provides an accumulator having a structure in which energy received externally by refrigerant is reduced, and the like.

Solution to Problem

According to one embodiment of the present invention, there is provided an accumulator to be connected on a suction side compressor by piping in a refrigeration cycle apparatus configured to form a refrigerant circuit using refrigerant containing a substance having such a property as to cause a disproportionation reaction, the accumulator being configured to accumulate refrigerant in a liquid state and including: a container allowing the refrigerant in the liquid state to accumulate therein; an inflow pipe allowing the refrigerant flowing through the refrigerant circuit to flow into the container; and an outflow pipe allowing the refrigerant to flow out of the container, in which an outlet shape of the inflow pipe or an outlet of the inflow pipe is formed so that a flow speed of the refrigerant in a direction normal to an inner wall surface of the container at time of collision of the refrigerant, which flows into the container through the inflow pipe, against the inner wall surface of the container is lower than a flow speed of the refrigerant inside the inflow pipe.

Advantageous Effects of Invention

In the accumulator of the present invention, the shape or direction of the outlet of an inflow pipe is devised to reduce collision energy at the time of collision between refrigerant and the inner wall surface of a vessel in the vessel. Accordingly, there can be obtained an accumulator that prevents, for example, the occurrence of an accident, such as pipe rupture in which a substance having such a property as to cause a disproportionation reaction, such as 1,1,2-trifluoroethylene (HFO-1123), causes a disproportionation reaction to be unable to be used as refrigerant, and hence that enables the substance to be safely used as refrigerant.

Brief Description of Drawings

[Fig. 1] Fig. 1 is a schematic view for illustrating an example of installation of a refrigeration cycle apparatus according to a first embodiment of the present invention.
[Fig. 2] Fig. 2 is a circuit configuration diagram of the refrigeration cycle apparatus according to the first embodiment of the present invention.
[Fig. 3] Fig. 3 is a circuit configuration diagram of the refrigeration cycle apparatus according to the first embodiment of the present invention during a cooling operation.
[Fig. 4] Fig. 4 is a circuit configuration diagram of the refrigeration cycle apparatus according to the first embodiment of the present invention during a heating operation.
[Fig. 5] Fig. 5 is a schematic view of a configuration of an accumulator of the refrigeration cycle apparatus according to the first embodiment of the present invention.
[Fig. 6] Fig. 6 is a schematic view of another configuration of the accumulator of the refrigeration cycle apparatus according to the first embodiment of the present invention.
[Fig. 7] Fig. 7 is a schematic view of still another configuration of the accumulator of the refrigeration cycle apparatus according to the first embodiment of the present invention.
[Fig. 8] Fig. 8 is a schematic view of yet another configuration of the accumulator of the refrigeration cycle apparatus according to the first embodiment of the present invention.
[Fig. 9] Fig. 9 is a circuit configuration diagram of a refrigeration cycle apparatus according to a second embodiment of the present invention.

Description of Embodiments

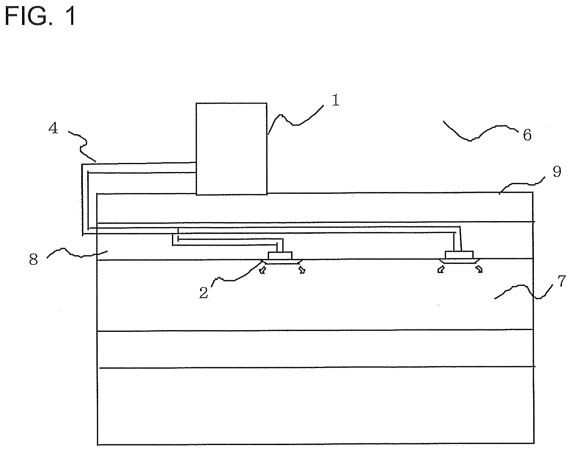

Now, a refrigeration cycle apparatus according to embodiments of the present invention is described referring to the drawings. In the drawings referred to below including Fig. 1, components denoted by the same reference symbols correspond to the same or equivalent components. This is common throughout the embodiments described below. Further, the forms of the components described herein are merely examples, and the components are not limited to the forms described herein. In particular, the combinations of the components are not limited to only the combinations in each embodiment, and the components described in another embodiment may be applied to still another embodiment. Further, unless otherwise necessary to be distinguished or specified, a plurality of devices of the same type or other components, which are distinguished from one another by suffixes or in another way, may be described without the suffixes. Further, the upper part and the lower part of the drawings are referred to as "upper side" and "lower side", respectively. Further, in the drawings, the size relationship between the components may be different from the actual size relationship. In addition, a high-and-low relationship or other relationships of temperature, pressure, or other factors are not determined in relation to particular absolute values, but are determined in a relative manner based on a state, an operation, or other factors of systems, devices, or other conditions.

First Embodiment

A first embodiment of the present invention is described referring to the drawings. Fig. 1 is a schematic view for illustrating an example of installation of a refrigeration cycle apparatus according to the first embodiment of the present invention. The refrigeration cycle apparatus illustrated in Fig. 1 is configured to form a refrigerant circuit configured to circulate refrigerant therethrough to use a refrigeration cycle with the refrigerant, thereby being capable of selecting any one of a cooling mode and a heating mode as an operation mode. Here, an air-conditioning apparatus configured to air-condition a space to be air-conditioned (indoor space 7) is described as an example of the refrigeration cycle apparatus according to this embodiment.

In Fig. 1, the refrigeration cycle apparatus according to this embodiment includes one outdoor unit 1 serving as a heat source apparatus, and a plurality of indoor units 2. The outdoor unit 1 and the indoor units 2 are connected to each other by extension pipes (refrigerant pipes) 4 through which the refrigerant is conveyed. Cooling energy or heating energy generated by the outdoor unit 1 is delivered to the indoor units 2.

The outdoor unit 1 is generally arranged in an outdoor space 6, which is a space outside of a construction 9 such as a building (for example, on a rooftop), and is configured to supply the cooling energy or heating energy to the indoor units 2. The indoor units 2 are arranged at positions at which temperature-adjusted air can be supplied to an indoor space 7 being a space inside the construction 9 (for example, residential room), and are configured to supply cooling air or heating air to the indoor space 7 being a space to be air-conditioned.

As illustrated in Fig. 1, in the refrigeration cycle apparatus according to this embodiment, the outdoor unit 1 and each of the indoor units 2 are connected by the two extension pipes 4.

In Fig. 1, an example of a case where the indoor unit 2 is a ceiling cassette type indoor unit is illustrated, but the present invention is not limited thereto. Any types of the indoor unit such as a ceiling-concealed indoor unit or a ceiling-suspended indoor unit may be adopted as long as heating air or cooling air can be blown into the indoor space 7 directly or through a duct or other means.

In Fig. 1, an example of a case where the outdoor unit 1 is installed in the outdoor space 6 is illustrated, but the present invention is not limited thereto. For example, the outdoor unit 1 may be installed in an enclosed space such as a machine room with a ventilation port. Alternatively, the outdoor unit 1 may be installed inside the construction 9 as long as waste heat is exhaustible to the outside of the construction 9 through an exhaust duct. Further, when a water-cooled outdoor unit 1 is adopted, the outdoor unit 1 may be installed inside the construction 9. No particular problem may arise even if the outdoor unit 1 is installed at any place.

Further, the numbers of the outdoor units 1 and the indoor units 2 to be connected are not limited to the numbers as illustrated in Fig. 1, but may be determined depending on the construction 9 in which the refrigeration cycle apparatus according to this embodiment is installed.

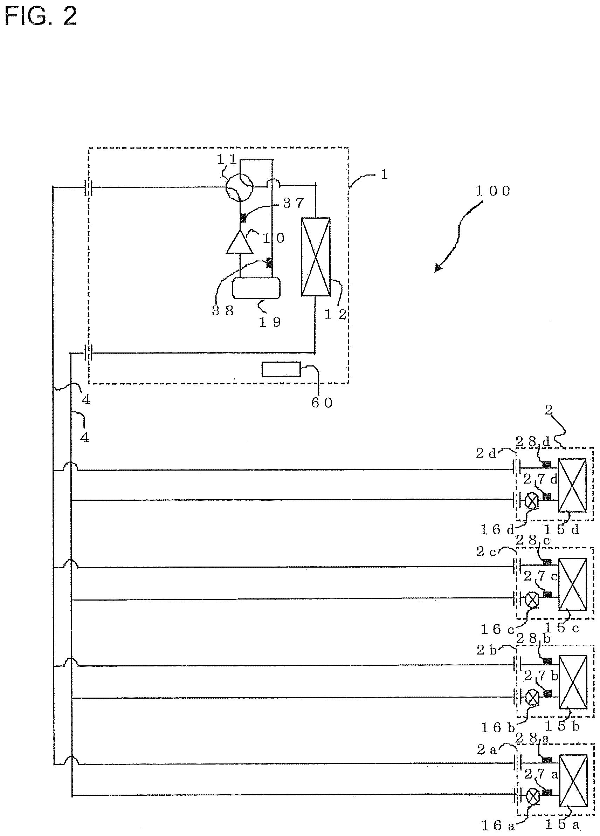

Fig. 2 is a circuit configuration diagram for illustrating an example of a circuit configuration of the refrigeration cycle apparatus according to the first embodiment (hereinafter referred to as "refrigeration cycle apparatus 100"). Referring to Fig. 2, a detailed configuration of the refrigeration cycle apparatus 100 is described. As illustrated in Fig. 2, the outdoor unit 1 and the indoor units 2 are connected to each other by the extension pipes (refrigerant pipes) 4 through which the refrigerant flows.

[Outdoor Unit 1]

In the outdoor unit 1, a compressor 10, a first refrigerant flow switching device 11 such as a four-way valve, a heat source-side heat exchanger 12, and an accumulator 19 are mounted in a serial connection by the refrigerant pipes.

The compressor 10 is configured to suck the refrigerant, and compress the refrigerant into a high-temperature and high-pressure state. For example, the compressor 10 may be a capacity-controllable inverter compressor or other components. The first refrigerant flow switching device 11 is configured to switch a flow of the refrigerant during a heating operation and a flow of the refrigerant during a cooling operation. The heat source-side heat exchanger 12 functions as an evaporator during the heating operation and functions as a condenser (or a radiator) during the cooling operation. Further, the heat source-side heat exchanger 12 serving as a first heat exchanger is configured to exchange heat between air supplied from a fan (not shown) and the refrigerant, thereby evaporating and gasifying the refrigerant or condensing and liquefying the refrigerant. The heat source-side heat exchanger 12 functions as a condenser during an operation of cooling the indoor space 7, and functions as an evaporator during an operation of heating the indoor space 7. The accumulator 19 is mounted on a suction side of the compressor 10 and configured to accumulate surplus refrigerant in the refrigerant circuit, which is generated due to a change in operation mode or the like.

The outdoor unit 1 includes the compressor 10, the first refrigerant flow switching device 11, the heat source-side heat exchanger 12, the accumulator 19, a high-pressure detection device 37, a low-pressure detection device 38, and a controller 60. Further, as the compressor 10, for example, a compressor having a low-pressure shell structure including a compression chamber defined inside a hermetic container placed under a low-refrigerant pressure atmosphere so as to suck and compress low-pressure refrigerant in the hermetic container or a compressor having a high-pressure shell structure including a hermetic container placed under a high-refrigerant pressure atmosphere so as to discharge high-pressure refrigerant compressed in a compression chamber into the hermetic container is used. Further, the outdoor unit 1 includes the controller 60 configured to control the devices based on information detected by various detection devices, an instruction from a remote controller, and the like. For example, a driving frequency of the compressor 10, a rotation speed (including ON/OFF) of a fan, switching of the first refrigerant flow switching device 11 are controlled to execute each of the operation modes described later. Here, the controller 60 according to this embodiment is, for example, a microcomputer including a control arithmetic processing unit such as a central processing unit (CPU). Further, the controller 60 includes a storage unit (not shown) having data containing, as programs, a processing procedure relating to the control and other operations. Then, the control arithmetic processing unit executes the processing based on the data of the program to realize the control.

[Indoor Unit 2]

Each of the indoor units 2 includes a load-side heat exchanger 15 mounted therein, serving as a second heat exchanger. The load-side heat exchanger 15 is connected to the outdoor unit 1 by the extension pipes 4. The load-side heat exchanger 15 is configured to exchange heat between air supplied from a fan (not shown) and the refrigerant so that heating air or cooling air to be supplied to the indoor space 7 is generated. The load-side heat exchangers 15 function as condensers during the operation of heating the indoor space 7 and function as evaporators during the operation of cooling the indoor space 7.

In Fig. 2, an example of a case where four indoor units 2 are connected is illustrated, and the four indoor units are illustrated as an indoor unit 2a, an indoor unit 2b, an indoor unit 2c, and an indoor unit 2d, respectively, in the stated order from the bottom of the drawing sheet. Further, corresponding to the indoor units 2a to 2d, the respective load-side heat exchangers 15 are illustrated as a load-side heat exchanger 15a, a load-side heat exchanger 15b, a load-side heat exchanger 15c, and a load-side heat exchanger 15d in the stated order from the bottom of the drawing sheet as well. Similarly to Fig. 1, the number of the indoor units 2 to be connected is not limited to four as illustrated in Fig. 2.

Each of the operation modes to be executed by the refrigeration cycle apparatus 100 is described. The refrigeration cycle apparatus 100 is configured to determine the operation mode of the outdoor unit 1 as any one of a cooling operation mode and a heating operation mode based on an instruction from each indoor unit 2. That is, the refrigeration cycle apparatus 100 is capable of performing the same operation (cooling operation or heating operation) among all the indoor units 2 to adjust the indoor temperature. Running and idling of each indoor unit 2 may be switched freely in any of the cooling operation mode and the heating operation mode.

The operation modes to be executed by the refrigeration cycle apparatus 100 include the cooling operation mode in which all the running indoor units 2 execute the cooling operation (including idling), and the heating operation mode in which all the running indoor units 2 execute the heating operation (including idling). Now, each of the operation modes is described with the flows of the refrigerant.

[Cooling Operation Mode]

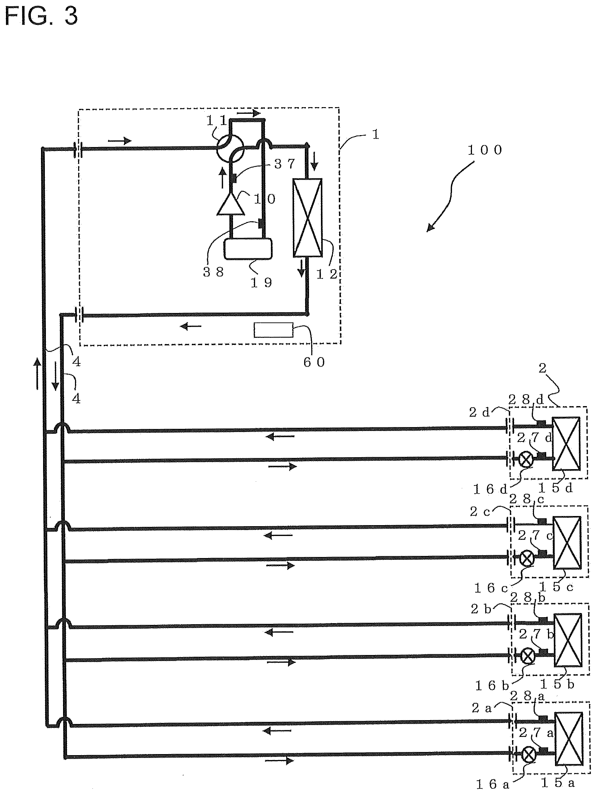

Fig. 3 is a refrigerant circuit diagram for illustrating the flow of the refrigerant during the cooling operation mode of the refrigeration cycle apparatus 100 when discharge temperature is low. In Fig. 3, the cooling operation mode is described taking as an example a case where a cooling load is generated in all the load-side heat exchangers 15. In Fig. 3, the pipes indicated by the thick lines are the pipes through which the refrigerant flows. A direction of the flow of the refrigerant is indicated by the solid arrows.

In the case of the cooling operation mode illustrated in Fig. 3, the first refrigerant flow switching device 11 in the outdoor unit 1 is switched so that the refrigerant discharged from the compressor 10 flows into the heat source-side heat exchanger 12. Low-temperature and low-pressure refrigerant is compressed by the compressor 10 and discharged as high-temperature and high-pressure gas refrigerant. The high-temperature and high-pressure gas refrigerant discharged from the compressor 10 flows into the heat source-side heat exchanger 12 through the first refrigerant flow switching device 11. Then, after the high-temperature and high-pressure gas refrigerant is condensed and liquefied into high-pressure liquid refrigerant in the heat source-side heat exchanger 12 while rejecting heat to the outdoor air, the high-pressure liquid refrigerant flows out of the outdoor unit 1.

The high-pressure liquid refrigerant flowing out of the outdoor unit 1 passes through the extension pipe 4 to flow into each of the indoor units 2 (2a to 2d). The high-pressure liquid refrigerant flowing into the indoor units 2 (2a to 2d) flows into an expansion devices 16 (16a to 16d) to be expanded and depressurized into low-temperature and low-pressure two-phase refrigerant by the expansion devices 16 (16a to 16d). Further, the refrigerant flows into each of the load-side heat exchangers 15 (15a to 15d) functioning as an evaporator. The refrigerant flowing into the load-side heat exchangers 15 takes away heat from air flowing around the load-side heat exchangers 15 to turn into low-temperature and low-pressure gas refrigerant. Then, the low-temperature and low-pressure gas refrigerant flows out of the indoor units 2 (2a to 2d), and passes through the extension pipe 4 to flow into the outdoor unit 1 again. Then, the refrigerant passes through the first refrigerant flow switching device 11, and is then sucked into the compressor 10 again through the accumulator 19.

At this time, an opening degree (opening area) of each of the expansion devices 16a to 16d is controlled so that a temperature difference (degree of superheat) between a temperature detected by a load-side heat exchanger gas refrigerant temperature detection device 28 and an evaporation temperature transmitted from the controller 60 of the outdoor unit 1 to a controller (not shown) of each of the indoor units 2 approximates a target value.

When the cooling operation mode is executed, the refrigerant is not required to be controlled to flow into the load-side heat exchanger 15 without a heat load (including a thermostat-off state), and hence the operation is stopped. At this time, the expansion device 16 corresponding to the idle indoor unit 2 is fully closed or set at a small opening degree for preventing the flow of refrigerant.

[Heating Operation Mode]

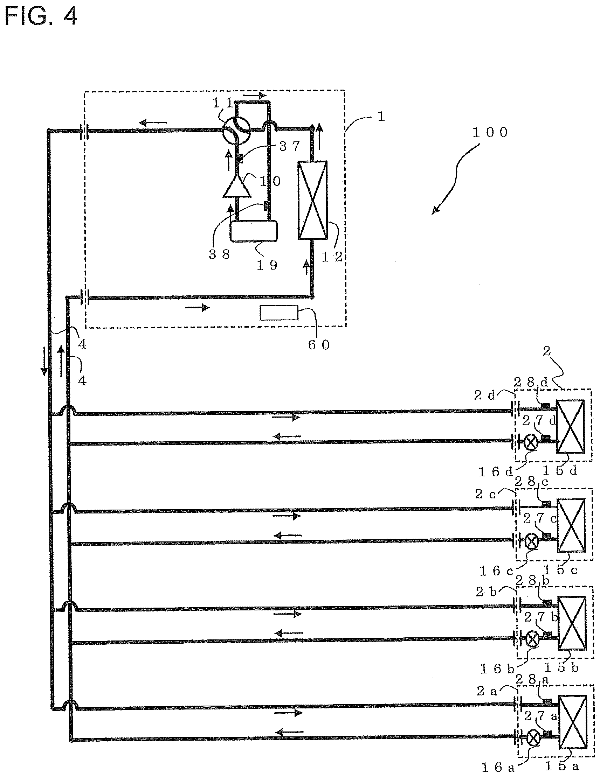

Fig. 4 is a refrigerant circuit diagram for illustrating a flow of refrigerant during the heating operation mode of the refrigeration cycle apparatus 100. In Fig. 4, the heating operation mode is described taking as an example a case where a heating load is generated in all of the load-side heat exchangers 15. In Fig. 4, the pipes indicated by the thick lines are the pipes through which the refrigerant flows, and directions of the flows of refrigerant are indicated by the solid arrows.

In the case of the heating operation mode illustrated in Fig. 4, the first refrigerant flow switching device 11 in the outdoor unit 1 is switched so that the refrigerant discharged from the compressor 10 is controlled to flow into the indoor units 2 without passing through the heat source-side heat exchanger 12. Low-temperature and low-pressure refrigerant is compressed into high-temperature and high-pressure gas refrigerant by the compressor 10 to be discharged from the compressor 10. The high-temperature and high-pressure gas refrigerant passes through the first refrigerant flow switching device 11 to flow out of the outdoor unit 1. The high-temperature and high-pressure gas refrigerant flowing out of the outdoor unit 1 passes through the extension pipe 4 to flow into each of the indoor units 2 (2a to 2d). The high-temperature and high-pressure gas refrigerant flowing into the indoor units 2 (2a to 2d) flows into each of the load-side heat exchangers 15 (15a to 15d), and is condensed and liquefied into high-temperature and high-pressure liquid refrigerant while rejecting heat to air flowing around the load-side heat exchangers 15 (15a to 15d). The high-temperature and high-pressure liquid refrigerant flowing out of the load-side heat exchangers 15 (15a to 15d) flows into the expansion devices 16 (16a to 16d) to be expanded and depressurized into low-temperature and low-pressure two-phase refrigerant by the expansion devices 16 (16a to 16d), and flows out of the indoor units 2 (2a to 2d). The low-temperature and low-pressure two-phase refrigerant flowing out of the indoor units 2 passes through the extension pipe 4 to flow into the outdoor unit 1 again.

At this time, the opening degree (opening area) of each of the expansion devices 16a to 16d is controlled so that a temperature difference (degree of subcooling) between a condensing temperature transmitted from the controller 60 of the outdoor unit 1 to a controller (not shown) of each of the indoor units 2 and a temperature detected by a load-side heat exchanger liquid refrigerant temperature detection device 27 approximates a target value.

The low-temperature and low-pressure two-phase refrigerant flowing into the outdoor unit 1 flows into the heat source-side heat exchanger 12 and takes away heat from air flowing around the heat source-side heat exchanger 12 to be evaporated into low-temperature and low-pressure gas refrigerant or low-temperature and low-pressure two-phase refrigerant with high quality. The low-temperature and low-pressure gas refrigerant or two-phase refrigerant is sucked into the compressor 10 again through the first refrigerant flow switching device 11 and the accumulator 19.

When the heating operation mode is executed, the refrigerant is not required to be controlled to flow into the load-side heat exchanger 15 without a heat load (including a thermostat-off state). When the expansion device 16 corresponding to the load-side heat exchanger 15 without a heating load is fully closed or is set to a small opening degree for preventing the flow of refrigerant in the heating operation mode, however, the refrigerant is cooled and condensed inside the idle load-side heat exchanger 15 by ambient air so that the refrigerant may stagnate, resulting in shortage of refrigerant in the entire refrigerant circuit. Therefore, during the heating operation, the opening degree (opening area) of the expansion device 16 corresponding to the load-side heat exchanger 15 without a heat load is set to a large opening degree, for example, is fully opened, thereby preventing the stagnation of refrigerant.

Further, a four-way valve is generally used for the first refrigerant flow switching device 11. However, the refrigerant flow switching device 11 is not limited thereto. A plurality of two-way passage switching valves or a plurality of three-way passage switching valves may be used so that the refrigerant flows in the same way.

As described above, in the refrigeration cycle apparatus 100 according to this embodiment, the high-temperature and high-pressure liquid refrigerant and the low-temperature and low-pressure gas refrigerant flow during the cooling operation, and the high-temperature and high-pressure gas refrigerant and the low-temperature and low-pressure two-phase refrigerant in the mixed state of the gas and the liquid flow during the heating operation, through the extension pipes 4 configured to connect the outdoor unit 1 and the indoor units 2. The liquid refrigerant has a larger density than the gas refrigerant. Hence, the amount of refrigerant in the extension pipes 4 is increased during the cooling operation, whereas surplus refrigerant is generated in the refrigerant circuit during the heating operation. Further, when the indoor units 2a to 2d include the stopped indoor unit 2, the amount of surplus refrigerant corresponding thereto is generated. Therefore, a unit configured to accumulate the surplus refrigerant therein is required in the refrigerant circuit. Thus, the surplus refrigerant is accumulated in the accumulator 19 installed on the suction side of the compressor 10. In an operation state in which the surplus refrigerant is generated during the heating operation, the refrigerant is caused to flow into the accumulator 19 after being placed in the two-phase state corresponding to the mixed state of the gas and the liquid so that the surplus refrigerant is accumulated in the accumulator 19. At this time, it is desired that, for example, the refrigerant in the two-phase state having quality of 0.8 or higher and 0.99 or lower flow into the accumulator 19.

[Kinds of Refrigerant]

When a substance generally used as the refrigerant, such as R32 or R410A, is used as the refrigerant to be used in the refrigeration cycle apparatus 100, the substance may be used as it is without efforts to improve stability of the refrigerant inside the refrigerant circuit. In this embodiment, however, a substance having such a property as to cause a disproportionation reaction, such as 1,1,2-trifluoroethylene (HFO-1123) represented by $C_2H_1F_3$ and having one double bond in a molecular structure thereof, or a refrigerant mixture obtained by mixing the substance having such a property as to cause a disproportionation reaction and another substance is used as the refrigerant. For example, a tetrafluoropropene represented by $C_3H_2F_4$ (such as HFO-1234yf that is 2,3,3,3-tetrafluoropropene represented by $CF_3CF=CH_2$ or HFO-1234ze that is 1,3,3,3-tetrafluoro-1-propene represented by $CF_3CH=CHF$) or difluoromethane (HFC-32) represented by a chemical formula $CH_2F_2$ is used as the substance to be mixed with the substance having such a property as to cause a disproportionation reaction for producing the refrigerant mixture. However, the substance is not limited thereto and HC-290 (propane) or the like may be mixed. Any substance may be used as long as the substance has such thermal performance as to be capable of being used as the refrigerant of a refrigeration cycle apparatus, and any mixing ratio may be adopted.

Here, when some strong energy is applied to the substance having such a property as to cause a disproportionation reaction, in a state in which a distance between the adjacent substances is extremely small, such as in a liquid state or a two-phase state, the adjacent substances may react with each other to turn into a different substance. Therefore, when the substance having such a property as to cause a disproportionation reaction is used as the refrigerant without any countermeasures in the refrigerant circuit, the substance may not only turn into a different substance to fail to function as the refrigerant but also cause an accident, e.g., pipe rupture due to a sudden pressure rise caused by heat generation. Therefore, in order to use the substance having such a property as to cause a disproportionation reaction as the refrigerant, efforts to prevent the occurrence of the disproportionation reaction are required at a location in the refrigerant circuit, at which the substance is in the liquid state or the two-phase state corresponding to the mixed state of the gas and the liquid. Here, energy generated when the refrigerant and a structure collide against each other is a factor for the substance to cause the disproportionation reaction. Therefore, a structure of reducing the collision energy applied to the refrigerant is provided to components of the refrigerant such that the possibility that the disproportionation reaction may occur is reduced.

[Accumulator 19]

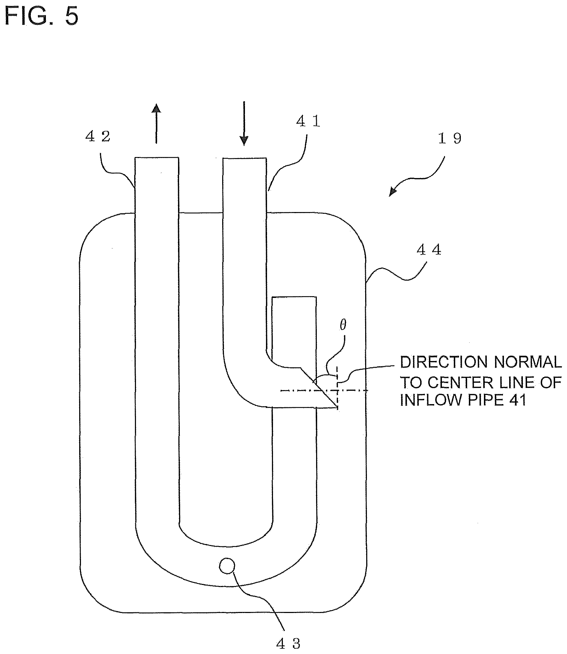

Fig. 5 is a schematic view of a configuration of the accumulator 19 according to the first embodiment of the present invention. Fig. 5 is a side view of the accumulator 19 as viewed from a side surface. The accumulator 19 includes an inflow pipe 41, an outflow pipe 42, an oil return port 43 formed in the outflow pipe 42, and a shell 44 of the accumulator 19, and has a structure in which the inflow pipe 41 and the outflow pipe 42 are inserted into the shell 44. In Fig. 5, the solid arrows indicate a direction of flow of the refrigerant. The refrigerant flows into the accumulator 19 through the inflow pipe 41 to be released inside the shell 44 so as to be expanded in volume, and then flows out thereof through the outflow pipe 42. Here, an inlet port (refrigerant inlet) of the outflow pipe 42 is arranged at a position higher than that of an outlet port (refrigerant outlet) of the inflow pipe 41, at which the refrigerant flowing into the inflow pipe 41 does not directly flow into the outflow pipe 42 due to inertia force and force of gravity. The oil return port 43 formed in the outflow pipe 42 functions to allow a refrigerant liquid, in which refrigerating machine oil accumulated in a lower part of the shell 44 is dissolved, to flow into the outflow pipe 42 so as to return the refrigerating machine oil to the compressor 10.

The inflow pipe 41 is inserted from an upper side of the shell 44 and is then bent horizontally inside the shell 44. The outlet port of the inflow pipe 41 is arranged at a position slightly away from an inner wall surface of the shell 44 so as not to be in contact with the inner wall surface of the shell 44. By directing the inflow pipe 41 toward the inner wall surface of the shell 44, the inflow pipe 41 functions to cause the refrigerant flowing into the accumulator 19 through the inflow pipe 41 to collide against the inner wall surface of the shell 44 so that a liquid component of the two-phase refrigerant and the refrigerating machine oil are separated inside the shell 44 to be accumulated in the lower part of the shell 44 under the force of gravity. As described above, the low-temperature and low-pressure gas refrigerant flows into the accumulator 19 during the cooling operation, whereas, during the heating operation, the surplus refrigerant is generated in the refrigerant circuit, and the two-phase refrigerant containing the mixture of the gas and the liquid thus flows into the accumulator 19. In a refrigeration cycle apparatus such as a multi-type air-conditioning apparatus including a plurality of the indoor units 2, the surplus refrigerant is sometimes generated to cause the two-phase refrigerant to flow into the accumulator 19 even during the cooling operation due to a change in the number of operating indoor units 2 and other reasons. When large collision energy is generated at the collision of the two-phase refrigerant flowing into the accumulator 19 through the inflow pipe 41 against the inner wall surface of the shell 44 of the accumulator 19, there is a fear that the generation of large collision energy may be a factor that causes the disproportionation reaction for the substance having such a property as to cause a disproportionation reaction. When the surplus refrigerant is generated, the two-phase refrigerant having quality of 0.8 or higher and 0.99 or lower flows into the accumulator 19.

Therefore, the accumulator 19 of this embodiment has a structure having an opening surface obtained by obliquely cutting an outlet portion (distal end) of the inflow pipe 41 at an angle (first angle) $\theta$ larger than 0 (zero) with respect to a direction normal to a center line of the inflow pipe 41 (a cut is oblique; when $\theta$ is 0, the opening surface is opposed to the inner wall surface of the shell 44). When the outlet portion of the inflow pipe 41 is obliquely cut, an area (opening area) through which the refrigerant flows out of the inflow pipe 41 increases, which correspondingly lowers a flow speed of the refrigerant. Therefore, the collision energy between the refrigerant and the shell 44 can be reduced. As a result, the disproportionation reaction is unlikely to occur.

Here, the collision energy generated between the inner wall surface of the shell 44 of the accumulator 19 and the refrigerant is obtained by Expression (1).

[Math. 1]

$$\text{COLLISION ENERGY} = \text{MASS OF REFRIGERANT} \times \text{CHANGE IN FLOW SPEED OF REFRIGERANT}$$

$$= (\text{MASS FLOW RATE OF REFRIGERANT} \times \text{UNIT TIME}) \times \text{CHANGE IN FLOW SPEED OF REFRIGERANT} \cdots (1)$$

Considering a case where the inflow pipe 41 is arranged so that the center line thereof is directed so as to be perpendicular to the inner wall surface of the shell 44, the flow speed of the refrigerant at the inner wall surface of the shell 44 is 0 (zero) and the collision energy is proportional to the flow speed of the refrigerant ejected from the inflow pipe 41. Further, the flow speed of the refrigerant ejected from the inflow pipe 41 depends on the angle $\theta$ at which the outlet (distal end) of the inflow pipe 41 is cut obliquely. Assuming that the density of the refrigerant remains unchanged, a volume flow rate of the refrigerant also remains unchanged. Therefore, the flow speed of the refrigerant ejected from the inflow pipe 41 is inversely proportional to the area of the outlet of the inflow pipe 41. Specifically, an increasing rate of the area of the outlet of the inflow pipe 41 is equal to a decreasing rate of the flow speed of the refrigerant ejected from the inflow pipe 41. When an inner diameter of the inflow pipe 41 is d (mm), an area (mm$^2$) of the outlet of the inflow pipe 41, which is cut obliquely, is obtained by Expression (2) based on the Pythagorean theorem. Here, $\theta$ is an angle with respect to the direction normal to the center line of the inflow pipe 41.

[Math. 2]

$$\text{AREA OF OUTLET OF INFLOW PIPE } 41 = d^2 + (d \times \tan\theta)^2 \cdots (2)$$

Specifically, the collision energy generated between the refrigerant and the inner wall of the shell 44 is inversely proportional to Expression (2), and a decreasing rate of the collision energy is expressed by Expression (3).

[Math. 3]

$$\text{COLLISION ENERGY DECREASING RATE} = d^2 / d^2 + (d \times \tan\theta)^2 \cdots (3)$$

Therefore, when the outlet (distal end) of the inflow pipe 41 is provided with a structure having the opening surface obliquely cut at the angle θ larger than 0 (zero), the collision energy generated between the refrigerant and the inner wall surface of the shell 44 is reduced. As a result, the disproportionation is unlikely to occur. Further, although the degree of reduction in collision energy, which is required to prevent the occurrence of the disproportionation reaction, differs depending on a state (pressure or temperature) of the refrigerant, the flow speed of the refrigerant, and other elements, a greater effect is obtained when the collision energy is reduced by 5% or larger. The effect of reducing the collision energy by 5% is obtained when a result of calculation of Expression (3) is 0.95, which is obtained when θ is about 13 degrees. Therefore, when a value obtained by the calculation of Expression (2) is equal to or larger than 0.95, specifically, the angle of the outlet (distal end) of the inflow pipe 41 of the accumulator 19 with respect to the direction normal to the center line of the inflow pipe 41 is set to 13 degrees or larger (opening angle of 154 degrees or smaller), the effect of reducing the collision energy is increased. Here, although the oblique opening portion is oriented upward in Fig, 5, the oblique opening portion may be oriented downward while setting a value of the angle θ larger than 0 (zero). Here, an upper limit of the angle θ is not particularly limited as long as a shape of the outlet capable of ensuring the flow speed at which the refrigerant is caused to collide against the wall surface can be formed.

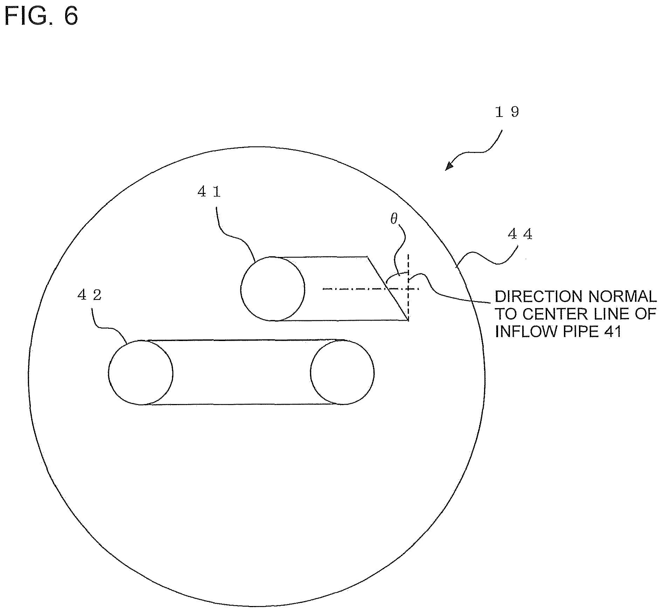

Fig. 6 is a schematic view of another (first) configuration of the accumulator 19 according to the first embodiment of the present invention. Fig. 6 is a view of the accumulator 19 as viewed from an upper surface side. In the accumulator 19 illustrated in Fig. 5, the outlet (distal end) of the inflow pipe 41 is cut obliquely in a vertical direction. Instead, the outlet (distal end) of the inflow pipe 41 may be cut obliquely in a horizontal direction as illustrated in Fig. 6. Further, even when the outlet is cut obliquely in any other directions, the collision energy generated between the refrigerant and the inner wall surface of the shell 44 can be reduced in inverse proportion to an area increasing rate of the outlet of the inflow pipe 41.

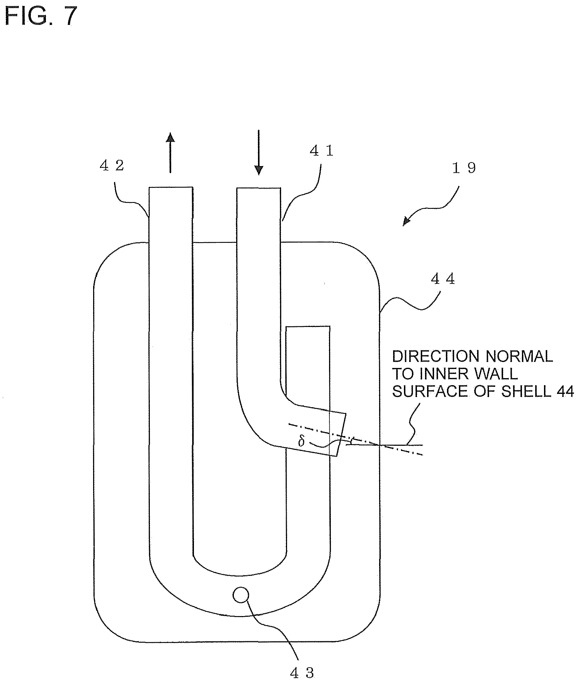

Fig. 7 is a schematic view of still another (second) configuration of the accumulator 19 according to the first embodiment of the present invention. Fig. 7 is a view of the accumulator 19 as viewed from a side surface side. In Fig. 7, the outlet (distal end) of the inflow pipe 41 of the accumulator 19 is arranged obliquely to a vertical direction so that the angle formed between the center line of the inflow pipe 41 and a direction normal to the inner wall surface of the shell 44 is an angle (second angle) δ larger than 0 (zero). As expressed by Expression (1), the collision energy generated between the refrigerant and the inner wall surface of the shell 44 is proportional to a change in flow speed of the refrigerant. When the inflow pipe 41 is installed obliquely with respect to the inner wall surface of the shell 44 as illustrated in Fig. 7, a flow speed component in a direction along the inner wall surface of the shell 44 does not change based on the principle of reflection. Therefore, the flow speed of the refrigerant changes for the amount of a flow speed component in the direction normal to the inner wall surface of the shell 44. Specifically, the amount of reduction in flow speed of the refrigerant is obtained by Expression (4).
[Math. 4]

$$\text{AMOUNT OF REDUCTION IN FLOW SPEED OF REFRIGERANT} \propto \sin(\delta) \qquad (4)$$

Therefore, when the inflow pipe 41 is installed obliquely at the angle δ larger than 0 (zero) with respect to the inner wall surface of the shell 44, the flow speed of the refrigerant is lowered to reduce the collision energy with the refrigerant. As a result, the disproportionation is unlikely to occur. The degree of reduction in collision energy, which is required to prevent the occurrence of the disproportionation reaction, differs depending on the state (pressure or temperature) of the refrigerant, the flow speed of the refrigerant, and other elements. A greater effect is obtained when the collision energy is reduced by 5% or larger. The effect of reducing the collision energy by 5% is obtained when a result of calculation of Expression (4) is 0.05. At this time, δ is about 3 degrees. Thus, when the value calculated by Expression (4) is set to be equal to or larger than 0.05, specifically, the angle δ of the inclination of the inflow pipe 41 with respect to the direction normal to the inner wall surface of the shell 44 is set to 3 degrees or larger, the effect of reducing the collision energy is increased. Here, although the outlet of the inflow pipe 41 is oriented slightly downward in Fig. 7, the outlet may be oriented upward while the value of the angle δ is set larger than 0 (zero). Here, an upper limit of the angle δ is not particularly limited as long as a flow speed at which and a direction in which the refrigerant is caused to collide against the wall surface can be ensured.

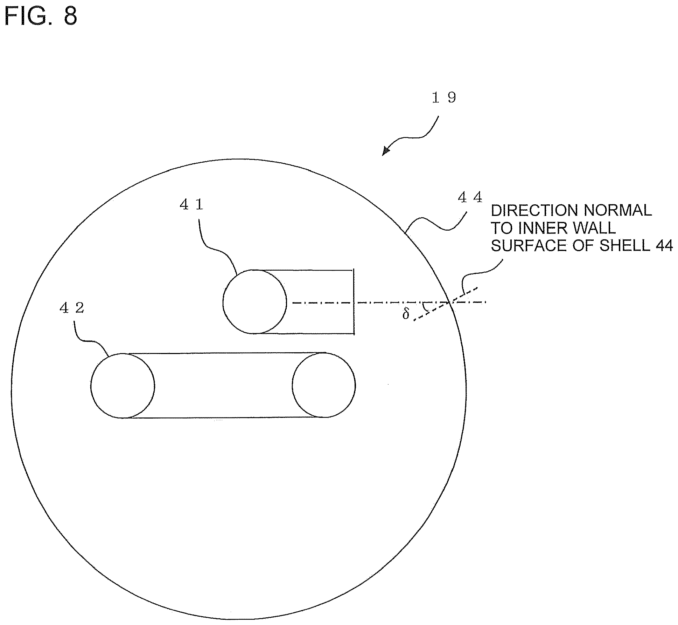

Fig. 8 is a schematic view of yet another (third) configuration of the accumulator 19 according to the first embodiment of the present invention. Fig. 8 is a view of the accumulator 19 as viewed from an upper surface side. In Fig. 8, the outlet (distal end) of the inflow pipe 41 of the accumulator 19 is arranged so as to be oriented obliquely at the angle δ larger than 0 (zero) in the horizontal direction with respect to the direction normal to the inner wall surface of the shell 44. Also in this case, the amount of reduction in flow speed of the refrigerant can be obtained by Expression (4) as in the case of Fig. 7. The collision energy generated between the refrigerant and the inner wall surface of the shell 44 of the accumulator 19 can be reduced correspondingly. Specifically, when the angle between the center line of the inflow pipe 41 for the refrigerant and the normal direction of the shell 44 is inclined at the angle δ larger than 0 (zero) in the vertical direction, the horizontal direction, or any other directions, the collision energy between the refrigerant and the inner wall surface of the shell 44 of the accumulator 19 is reduced. Therefore, the same effects are obtained thereby.

Here, although the accumulator 19 including the shell 44 elongated in a longitudinal direction (vertical direction) is illustrated in this embodiment, the shell may have any shape such as a structure elongated in a traverse direction.

[Extension Pipes 4]

As described above, the refrigeration cycle apparatus 100 according to this embodiment has some operation modes. In those operation modes, the refrigerant flows through the extension pipes 4 configured to connect the outdoor unit 1 and the indoor units 2 to each other.

Although the high-pressure detection device 37 and the low-pressure detection device 38 are installed so as to control a high pressure and a low pressure in the refrigeration cycle to target values, a temperature detection device configured to detect the saturation temperature may be provided instead.

Further, although the four-way valve is used for the first refrigerant flow switching device 11, the refrigerant flow switching device 11 is not limited thereto. A plurality of two-way passage switching valves or a plurality of three-way passage switching valves may be used so that the refrigerant flows in the same way.

Further, the fans are generally mounted on the heat source-side heat exchanger 12 and the load-side heat exchangers 15a to 15d, and the condensation or evaporation is promoted by sending air in many cases, but the present invention is not limited thereto. For example, panel heaters utilizing radiation or other such devices may be used as the load-side heat exchangers 15a to 15d, and a water-cooled device for transferring heat with water or an antifreeze solution may also be used as the heat source-side heat exchanger 12. Any heat exchangers may be used as long as the heat exchangers have a structure capable of rejecting or taking away heat.

Further, although the case where the number of load-side heat exchangers 15a to 15d is four is described as an example, any number of load-side heat exchangers may be connected. In addition, a plurality of the indoor units 1 may be connected to form a single refrigeration cycle.

Further, although the refrigeration cycle apparatus 100 of the type for switching the cooling and the heating in which the indoor units 2 perform any one of the cooling operation and the heating operation is described as an example, the refrigeration cycle apparatus is not limited thereto. For example, the present invention is also applicable to a refrigeration cycle apparatus including the indoor units 2, each capable of arbitrarily selecting any one of the cooling operation and the heating operation, so that a mixed operation with the indoor unit 2 performing the cooling operation and the indoor unit 2 performing the heating operation can be performed as the entire system, and the same effects are obtained thereby.

Further, the present invention is also applicable to an air-conditioning apparatus such as a room air-conditioning apparatus to which only one indoor unit 2 can be connected, a refrigeration apparatus to which a showcase or a unit cooler is connected, and other apparatus. The same effects can be obtained as long as the refrigeration cycle apparatus uses the refrigeration cycle.

Second Embodiment

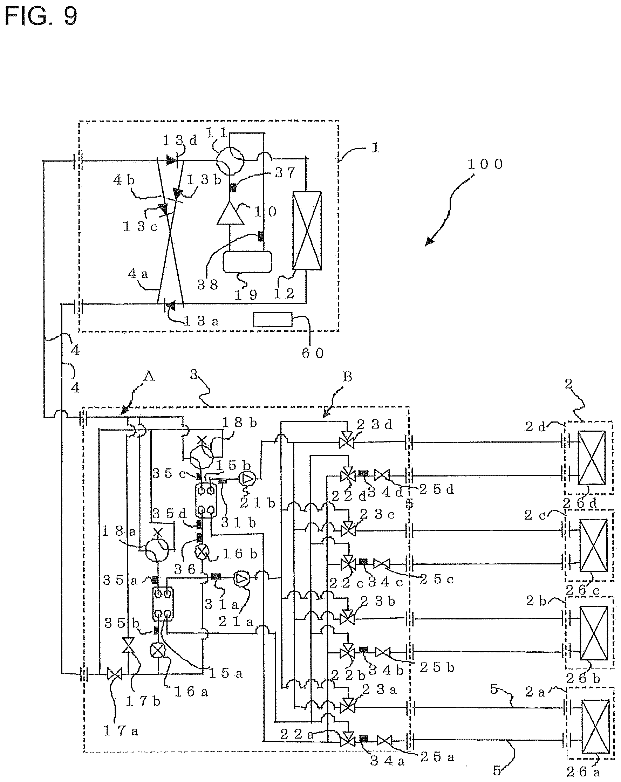

A second embodiment of the present invention is described referring to the drawings. Fig. 9 is a circuit diagram of a refrigeration cycle apparatus according to the embodiment of the present invention. The refrigeration cycle apparatus 100 illustrated in Fig. 9 includes the indoor unit 1 and a heat medium relay unit 3 connected by the extension pipes 4 inside which the refrigerant flows through the load-side heat exchanger 15a and the load-side heat exchanger 15b included in the heat medium relay unit 3. Further, the heat medium relay unit 3 and the indoor units 2 are connected by pipes 5 inside which a heat medium such as water or brine flows through the load-side heat exchanger 15a and the load-side heat exchanger 15b.

Operation modes executed by the refrigeration cycle apparatus 100 include a cooling only operation mode in which all the driven indoor units 2 perform the cooling operation and a heating only operation mode in which all the driven indoor units 2 perform the heating operation. Further, the operation modes also include a cooling main operation mode executed when a cooling load is larger and a heating main operation mode executed when a heating load is larger.

[Cooling Only Operation Mode]

In the case of the cooling only operation mode, high-temperature and high-pressure gas refrigerant discharged from the compressor 10 flows into the heat source-side heat exchanger 12 through the first refrigerant flow switching device 11, is condensed and liquefied into high-pressure liquid refrigerant while rejecting heat to circumambient air, and passes through a check valve 13a to flow out of the outdoor unit 1. Then, the high-pressure liquid refrigerant passes through the extension pipe 4 to flow into the heat medium relay unit 3. The refrigerant flowing into the heat medium relay unit 3 passes through an opening and closing device 17a and is expanded by the expansion devices 16a and 16b into low-temperature and low-pressure two-phase refrigerant. The two-phase refrigerant flows into each of the load-side heat exchanger 15a and the load-side heat exchanger 15b, acting as the evaporator, to take away heat from the heat medium circulating through a heat medium circulation circuit B to turn into low-temperature and low-pressure gas refrigerant. The gas refrigerant flows out of the heat medium relay unit 3 through a second refrigerant flow switching device 18a and a second refrigerant flow switching device 18b. Then, the gas refrigerant passes through the extension pipe 4 to flow into the outdoor unit 1 again. The refrigerant flowing into the outdoor unit 1 passes through a check valve 13d to be sucked into the compressor 10 again through the first refrigerant flow switching device 11 and the accumulator 19.

In the heat medium circulation circuit B, the heat medium is cooled with the refrigerant in both the load-side heat exchanger 15a and the load-side heat exchanger 15b. The cooled heat medium is caused to flow inside the pipes 5 by pumps 21 a and 21 b. The heat medium flowing into use-side heat exchangers 26a to 26d through second heat medium flow switching devices 23a to 23d takes away heat from indoor air. The indoor air is cooled to cool the indoor space 7. The refrigerant flowing out of the use-side heat exchangers 26a to 26d flows into heat medium flow control devices 25a to 25d, passes through first heat medium flow switching devices 22a to 22d to flow into the load-side heat exchanger 15a and the load-side heat exchanger 15b so as to be cooled, and is sucked into the pumps 21 a and 21 b again. The heat medium flow control devices 25a to 25d corresponding to the use-side heat exchangers 26a to 26d without a heat load are fully closed. Further, the opening degree of the heat medium flow control devices 25a to 25d corresponding to the use-side heat exchangers 26a to 26d without a heat load is adjusted so as to control the heat load in the use-side heat exchangers 26a to 26d.

[Heating Only Operation Mode]

In the case of the heating only operation mode, the high-temperature and high-pressure gas refrigerant discharged from the compressor 10 passes through the first connecting pipe 4a and a check valve 13b through the first refrigerant flow switching device 11 to flow out of the indoor unit 1. Then, the gas refrigerant passes through the extension pipe 4 to flow into the heat medium relay unit 3. The refrigerant flowing into the heat medium relay unit 3 passes through the second refrigerant flow switching device 18a and the second refrigerant flow switching device 18b to flow into each of the load-side heat exchanger 15a and the load-side heat exchanger 15b to turn into high-pressure liquid refrigerant while rejecting heat to the heat medium circulating through the heat medium circulation circuit B. The high-pressure liquid refrigerant is expanded by the expansion devices 16a and 16b into low-temperature and low-pressure two-phase refrigerant, which then passes through an opening and closing device 17b to flow out of the heat medium relay unit 3. Then, the low-temperature and low-pressure two-phase refrigerant passes through the extension pipe 4 to flow into the outdoor unit 1 again. The refrigerant flowing into the outdoor unit 1 passes through a second connecting pipe 4b and a check valve 13c to flow into the heat source-side heat exchanger 12 acting as the evaporator to turn into low-temperature and low-pressure gas refrigerant while taking away heat from the circumambient air. The gas refrigerant is sucked into the compressor 10 again through the first refrigerant flow switching device 11 and the accumulator 19. An operation of the heat medium in the heat medium circulation circuit B is the same as that in the cooling only operation mode. In the heating only operation mode, the heat medium is heated with the refrigerant in the load-side heat exchanger 15a and the load-side heat exchanger 15b and rejects heat to the indoor air in the use-side heat exchanger 26a and the use-side heat exchanger 26b so as to heat the indoor space 7.

[Cooling Main Operation Mode]

In the case of the cooling main operation mode, the high-temperature and high-pressure gas refrigerant discharged from the compressor 10 flows into the heat source-side heat exchanger 12 through the first refrigerant flow switching device 11 and is condensed into the two-phase refrigerant while rejecting heat to the circumambient air, which then passes through the check valve 13a to flow out of the outdoor unit 1. Then, the two-phase refrigerant passes through the extension pipe 4 to flow into the heat medium relay unit 3. The refrigerant flowing into the heat medium relay unit 3 passes through the second refrigerant switching device 18b to flow into the load-side heat exchanger 15b acting as the condenser to turn into high-pressure liquid refrigerant while rejecting heat to the heat medium circulating through the heat medium circulation circuit B. The high-pressure liquid refrigerant is expanded by the expansion device 16b into low-temperature and low-pressure two-phase refrigerant. The two-phase refrigerant flows into the load-side heat exchanger 15a acting as the evaporator through the expansion device 16a to turn into low-pressure gas refrigerant while taking away heat from the heat medium circulating through the heat medium circulation circuit B, which then flows out of the heat medium relay unit 3 through the second refrigerant flow switching device 18a. Then, the low-pressure gas refrigerant passes through the extension pipe 4 to flow into the outdoor unit 1 again. The refrigerant flowing into the outdoor unit 1 passes through the check valve 13d to be sucked into the compressor 10 again through the first refrigerant flow switching device 11 and the accumulator 19.

In the heat medium circulation circuit B, heating energy of the refrigerant is transferred to the heat medium in the load-side heat exchanger 15b. Then, the heated heat medium is caused to flow inside the pipes 5 by the pump 21 b. The heat medium is caused to flow into the use-side heat exchangers 26a to 26d, for which a heating request is made, by operating the first heat medium flow switching devices 22a to 22d and the second heat medium flow switching devices 23a to 23d, and rejects heat to the indoor air. The indoor air is heated to heat the indoor space 7. On the other hand, cooling energy of the refrigerant is transferred to the heat medium in the load-side heat exchanger 15a. Then, the cooled heat medium is caused to flow through the pipes 5 by the pump 21 a. The heat medium is caused to flow into the use-side heat exchangers 26a to 26d, for which a cooling request is made, by operating the first heat medium flow switching devices 22a to 22d and the second heat medium flow switching devices 23a to 23d, and takes away heat from the indoor air. The indoor air is cooled to cool the indoor space 7. The heat medium flow control devices 25a to 25d corresponding to the use-side heat exchangers 26a to 26d without a heat load are fully closed. Further, the opening degree of the heat medium flow control devices 25a to 25d corresponding to the use-side heat exchangers 26a to 26d with a heat load is adjusted so as to control a heat load in the use-side heat exchangers 26a to 26d.

[Heating Main Operation Mode]

In the case of the heating main operation mode, the high-temperature and high-pressure gas refrigerant discharged from the compressor 10 flows through the first refrigerant flow switching device 11 and then passes through the first connecting pipe 4a and the check valve 13b to flow out of the outdoor unit 1. Then, the high-temperature and high-pressure gas refrigerant passes through the extension pipe 4 to flow into the heat medium relay unit 3. The refrigerant flowing into the heat medium relay unit 3 passes through the second refrigerant switching device 18b to flow into the load-side heat exchanger 15b acting as the condenser to turn into high-pressure liquid refrigerant while rejecting heat to the heat medium circulating through the heat medium circulation circuit B. The high-pressure liquid refrigerant is expanded by the expansion device 16b into low-temperature and low-pressure two-phase refrigerant. The two-phase refrigerant flows into the load-side heat exchanger 15a acting as the evaporator through the expansion device 16a to take away heat from the heat medium circulating through the heat medium circulation circuit B, and then flows out of the heat medium relay unit 3 through the second refrigerant flow switching device 18a. Then, the two-phase refrigerant passes through the extension pipe 4 to flow into the outdoor unit 1 again. The refrigerant flowing into the outdoor unit 1 passes through the second connecting pipe 4b and the check valve 13c to flow into the heat-source side heat exchanger 12 acting as the evaporator to turn into low-temperature and low-pressure gas refrigerant while taking away heat from the circumambient air. The gas refrigerant is sucked into the compressor 10 again through the first refrigerant flow switching device 11 and the accumulator 19. An operation of the heat medium in the heat medium circulation circuit B and operations of the first heat medium flow switching devices 22a to 22d, the second heat medium flow switching devices 23a to 23d, the heat medium flow switching devices 25a to 25d, and the use-side heat exchangers 26a to 26d are the same as those in the cooling main operation mode.

[Kinds of Refrigerant and Accumulator 19]

For kinds of refrigerant and the accumulator 19, those having the configurations described in the first embodiment can be applied. The same effects are obtained also in the refrigeration cycle apparatus 100 of this embodiment.

[Extension Pipe 4 and Pipe 5]

In each of the operation modes according to this embodiment, the refrigerant flows through the extension pipes 4 configured to connect the indoor unit 1 and the heat medium relay unit 3, whereas the heat medium such as water or the antifreeze solution flows through the pipes 5 configured to connect the heat medium relay unit 3 and the indoor units 2.

When the heating load and the cooling load are generated in a mixed manner in the use-side heat exchangers 26, the first heat medium flow switching device 22 and the second heat medium switching device 23 corresponding to the use-side heat exchanger 26 performing the heating operation is switched to a flow connected to the load-side heat exchanger 15b used for heating. Further, the first heat medium flow switching device 22 and the second heat medium flow switching device 23 corresponding to the use-side heat exchanger 26 performing the cooing operation is switched to a flow connected to the load-side heat exchanger 15a used for cooling. Therefore, each of the indoor units 2 can freely perform the heating operation or the cooling operation.

The first heat medium flow switching devices 22 and the second heat medium flow switching devices 23 may be any heating medium flow switching devices such as a three-way valve capable of switching a three-way passage or a combination of two opening and closing valves capable of opening and closing a two-way passage as long as the flow can be switched. Further, a switching device such as a stepping-motor driven mixing valve capable of changing a flow rate of the three-way passage, a combination of two switching devices such as electronic expansion valves, each capable of changing a flow rate of the two-way passage, or the like may be used as the first heat medium flow switching devices 22 and the second head medium flow switching devices 23. Further, the heat medium flow control devices 25 may be control valves other than the two-way valves, each having a three-way passage, so as to be installed together with a bypass pipe configured to bypass the use-side heat exchangers 26. Further, the heat medium flow control devices 25 are preferably of stepping motor driven type capable of controlling the flow rate through the passage, and may be any of two-way valves and three-way valves having one closed end. Further, as the heat medium flow control devices 25, those configured to open and close the two-way passage, such as opening and closing valves, may be used to repeat ON/OFF so as to control an average flow rate.

Further, although each of the first refrigerant flow switching device 11 and the second refrigerant flow switching devices 18 is described as the four-way valve, those devices are not limited thereto. A plurality of two-way switching valves or three-way switching valves may be used so that the refrigerant flows in the same manner.

Further, it is apparent that the same effects are obtained even when only one use-side heat exchanger 26 and only one heat medium flow control device 25 are connected. Further, it is apparent that no problem arises even when a plurality of the load-side heat exchangers 15 performing the same operation and a plurality of the expansion devices 16 performing the same operation are installed. Further, although the case where the heat medium flow control devices 25 are built in the heat medium relay unit 3 is described, the heat medium flow control devices 25 are not limited thereto. The heat medium flow control devices 25 may be built in the indoor units 2, and the heat medium relay unit 3 and the indoor units 2 may be formed independently of each other.

As the heating medium, for example, brine (antifreeze solution), a mixed liquid of brine and water, a mixed liquid of water and an additive having a high anticorrosion effect, or the like can be used. Therefore, in the refrigeration cycle apparatus 100, even when the heat medium leaks into the indoor space 7 through the indoor units 2, the heat medium having high safety is used, which therefore contributes to improvement of safety.

Further, the fans are generally mounted on the heat source-side heat exchanger 12 and the use-side heat exchangers 26a to 26d, and the condensation or evaporation is promoted by sending air in many cases, but the present invention is not limited thereto. For example, panel heaters utilizing radiation or other such devices may be used as the use-side heat exchangers 26a to 26d. Further, a water-cooled device for transferring heat with water or an antifreeze solution may also be used as the heat source-side heat exchanger 12. Any heat exchangers may be used as long as the heat exchangers have a structure capable of rejecting or taking away heat.

Further, although the case where the number of use-side heat exchangers 26a to 26d is four is described as an example, any number of use-side heat exchangers may be connected. In addition, a plurality of the indoor units 1 may be connected to form a single refrigeration cycle.

Further, although the case where the number of the load-side heat exchangers 15a and 15b is two is described, it is apparent that the number of load-side heat exchangers is not limited thereto. Any number of load-side heat exchangers may be installed as long as the heat medium can be cooled and/or heated.

The number of each of the pumps 21 a and 21 b is not limited to one. A plurality of pumps having a small capacity may be arranged in parallel.

Further, for the system in which the compressor 10, the four-way valve (first refrigerant flow switching device) 11, and the heat source-side heat exchanger 12 are accommodated in the outdoor unit 1, the use-side heat exchangers 26 configured to exchange heat between the air in the space to be air-conditioned and the refrigerant are each accommodated in the corresponding indoor units 2, the load-side heat exchangers 15 and the expansion devices 16 are accommodated in the heat medium relay unit 3, the outdoor unit 1 and the heat medium relay unit 3 are connected by the extension pipes 4 to circulate the refrigerant therethrough, each of the indoor units 2 and the heat medium relay unit 3 are connected by a set of the two pipes 5 to circulate the heat medium therethrough, and heat is exchanged between the refrigerant and the heat medium in the load-side heat exchangers 15, the system capable of performing the mixed operation by the indoor unit 2 performing the cooling operation and the indoor unit 2 performing the heating operation is described as an example. However, the system is not limited thereto. For example, the present invention is also applicable to a system in which the outdoor unit 1 described in the first embodiment and the heat medium relay unit 3 are combined so that the indoor units 2 perform only the cooling operation or the heating operation, and the same effects are obtained thereby.

Reference Signs List

]

1 heat source apparatus (outdoor unit) 2a, 2b, 2c, 2d indoor unit 3 heat medium relay unit 4 extension pipe (refrigerant pipe) 4a first connecting pipe 4b second connecting pipe 5 pipe (heat medium pipe) 6 outdoor space 7 indoor space 8 space other than outdoor space or indoor space, e.g., roof space 9 construction, e.g., building 10 compressor 11 first refrigerant flow switching device (four-way valve) 12 heat source-side heat exchanger 13a, 13b, 13c, 13d check valve 15, 15a, 15b, 15c, 15d load-side heat exchanger 16a, 16b, 16c, 16d expansion device 17a, 17b opening and closing device18, 18a, 18b second refrigerant flow switching device 19 accumulator 21 a, 21 b pump 22, 22a, 22b, 22c, 22d first heat medium flow switching device 23, 23a, 23b, 23c, 23d second heat medium flow switching device 25, 25a, 25b, 25c, 25d heat medium flow control device 26, 26a, 26b, 26c, 26d use-side heat exchanger 27 load-side heat exchanger liquid refrigerant temperature detection device 28 load-side heat exchanger gas refrigerant temperature detection device 37 high-pressure detection device 38 low-pressure detection device 41 inflow pipe 42 outflow pipe 43 oil return port 44 shell 60 controller 100 refrigeration cycle apparatus A refrigerant circulation circuit B heat medium circulation circuit

**Claims**

1. An accumulator connected on a suction side of a compressor by piping in a refrigeration cycle apparatus configured to form a refrigerant circuit by using refrigerant containing a substance having such a property as to cause a disproportionation reaction, the accumulator being configured to accumulate the refrigerant in a liquid state and comprising:

   a container allowing the refrigerant in the liquid state to accumulate therein;
   an inflow pipe allowing the refrigerant flowing through the refrigerant circuit to flow into the container; and
   an outflow pipe allowing the refrigerant to flow out of the container,

   wherein an outlet shape of the inflow pipe or an outlet of the inflow pipe is formed so that a flow speed of the refrigerant in a direction normal to an inner wall surface of the container at time of collision of the refrigerant, which flows into the container through the inflow pipe, against the inner wall surface of the container is lower than a flow speed of the refrigerant inside the inflow pipe.

2. The accumulator of claim 1, wherein an opening surface at the outlet of the inflow pipe is formed with a cut having a first angle larger than 0 with respect to a direction normal to a center line of the inflow pipe of the accumulator.

3. The accumulator of claim 2, wherein the first angle is equal to or larger than 13 degrees.

4. The accumulator of claim 2, wherein, when an inner diameter of the inflow pipe is d and the first angle is $\theta$, the first angle is an angle obtained when $d^2/[d^2+\{d\times\tan(\theta)\}^2]$ is equal to or smaller than 0.95.

5. The accumulator of claim 1, wherein the outlet of the inflow pipe is formed to be oriented so that an angle formed between the center line of the inflow pipe of the accumulator and the direction normal to the inner wall surface of the accumulator is a second angle larger than 0.

6. The accumulator of claim 5, wherein the second angle is equal to or larger than 3 degrees.

7. The accumulator of claim 5, wherein, when the second angle is $\delta$, the second angle is an angle obtained when $\sin(\delta)$ is equal to or larger than 0.05.

8. The accumulator of any one of claims 1 to 7, wherein the refrigerant to be used comprises 1,1,2-trifluoroethylene or a refrigerant mixture containing 1,1,2-trifluoroethylene.

9. A refrigeration cycle apparatus, comprising a compressor, a first heat exchanger, an expansion device, a second heat exchanger, and the accumulator of any one of claims 1 to 8 connected by a refrigerant pipe to form a refrigerant circuit.

10. The refrigeration cycle apparatus of claim 9, wherein refrigerant in a two-phase state is caused to flow into the accumulator.

11. The refrigeration cycle apparatus of claim 10, wherein the refrigerant in the two-phase state having quality of 0.8 or higher and 0.99 or lower is caused to flow into the accumulator.

12. The refrigeration cycle apparatus of any one of claims 9 to 11, further comprising:

a refrigerant flow switching device configured to switch a flow of the refrigerant; and
an extension pipe connecting the first heat exchanger and the second heat exchanger,

wherein the refrigerant in the two-phase state is caused to flow into the accumulator in an operation mode in which the first heat exchanger serves as an evaporator and the second heat exchanger serves as a condenser.

13. The refrigeration cycle apparatus of any one of claims 9 to 12, further comprising:

a plurality of indoor units configured to air-condition a space to be air-conditioned; and
one or a plurality of heat source-side units each comprising the accumulator.

FIG. 1

FIG. 2

FIG. 3

## FIG. 4

# FIG. 5

DIRECTION NORMAL
TO CENTER LINE OF
INFLOW PIPE 41

FIG. 6

19

41

θ

44

42

DIRECTION NORMAL
TO CENTER LINE OF
INFLOW PIPE 41

# FIG. 7

42 41 19 44

DIRECTION NORMAL
TO INNER WALL
SURFACE OF SHELL 44

δ

43

FIG. 8

1 9

4 1

4 2

4 4 DIRECTION NORMAL
TO INNER WALL
SURFACE OF SHELL 44

δ

FIG. 9

**INTERNATIONAL SEARCH REPORT**

| International application No. |
| --- |
| PCT/JP2014/057037 |

A. CLASSIFICATION OF SUBJECT MATTER
*F25B1/00*(2006.01)i, *C09K5/04*(2006.01)i, *F25B43/00*(2006.01)i

According to International Patent Classification (IPC) or to both national classification and IPC

B. FIELDS SEARCHED

Minimum documentation searched (classification system followed by classification symbols)
F25B1/00, C09K5/04, F25B43/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 8-110127 A (Mitsubishi Electric Corp.), 30 April 1996 (30.04.1996), paragraphs [0060], [0061]; fig. 2, 11 & US 5605058 A & EP 672875 A2 & CN 1123899 A & CN 1425890 A | 1-4,8-13 |
| Y | WO 2012/157764 A1 (Asahi Glass Co., Ltd.), 22 November 2012 (22.11.2012), paragraph [0013] (Family: none) | 1-13 |
| Y | JP 2012-131994 A (JX Nippon Oil & Energy Corp.), 12 July 2012 (12.07.2012), paragraph [0127] & US 2012/0132848 A1 & CN 102533392 A | 1-13 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 June, 2014 (10.06.14) | 24 June, 2014 (24.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 3 128 258 A1**

## INTERNATIONAL SEARCH REPORT

<table>
<tr><td colspan="2">International application No.</td></tr>
<tr><td colspan="2">PCT/JP2014/057037</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-505296 A (E.I. Du Pont de Nemours & Co.), 01 March 2012 (01.03.2012), paragraph [0015] & US 2009/0143604 A1 & US 2010/0090156 A1 & US 2012/0083619 A1 & US 2012/0168672 A1 & WO 2010/042781 A2 & WO 2009/067571 A1 & CN 101861322 A & CA 2736216 A & CN 102177118 A | 1-13 |
| Y | JP 11-201588 A (Matsushita Refrigeration Co.), 30 July 1999 (30.07.1999), paragraph [0031]; fig. 1, 2 (Family: none) | 5-7 |

Form PCT/ISA/210 (continuation of second sheet) (July 2009)

**EP 3 128 258 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 12157764 A